# EUROPEAN PATENT SPECIFICATION

(11) **EP 4 124 548 B1**
(45) Date of publication and mention of the grant of the patent: **09.07.2025**
(21) Application number: 22187885.3
(22) Date of filing: 29.07.2022
(51) Int. Cl.: B62H 3/08, B62H 3/12

(54) **APPARATUS FOR HOLDING A WHEEL MEMBER AT A DESIRED LOCATION**
VORRICHTUNG ZUM HALTEN EINES RADELEMENTS AN EINER GEWÜNSCHTEN STELLE
APPAREIL DE MAINTIEN D'UN ÉLÉMENT DE ROUE À UN EMPLACEMENT DÉSIRÉ

(30) Priority: 30.07.2021 GB 202110983
(43) Date of publication of application: 01.02.2023
(73) Proprietor: Bullet Ventures Limited, Exeter EX1 1SQ (GB)
(72) Inventor: DE PELET, Louis Guy, Templecombe, BA8 0PG (GB); DE PELET, Thomas James Albert, Exeter, EX1 1SQ (GB)
(74) Representative: Secerna LLP

(56) References cited:
- FR-A1- 2 605 432
- US-A- 5 292 009
- US-A1- 2010 019 478
- US-A1- 2019 193 621

## Description

The present invention relates to an apparatus for holding a wheel member at a desired location.

It is known to hold a wheel by locating part of the wheel between a first holder and a second holder so that the first holder engages a first side of the tyre of the wheel and the second holder engages a second side of the tyre. However over time the tyre pressure may reduce or the tyre may even become totally deflated. This lower tyre pressure may result in the engagement force between the two holders and the tyre becoming insufficient to hold the wheel in place, and thus the wheel may fall out. If the wheel were accidentally knocked or pushed, this may also cause the wheel to fall out from between the two holders.

US patent application published under number 2010/0019478 describes an apparatus for supporting a motorcycle on all terrains, and a means of supporting the tire of a motorcycle in an upright position. Document FR 2605432 A1 discloses the preamble of claim 1.

It is an aim of the present invention to at least partly mitigate one or more of the above-mentioned problems.

It is an aim of certain embodiments of the present invention to securely hold a wheel member in position relative to a first holder element and a second holder element, even if a tyre pressure reduces or the tyre becomes totally deflated.

It is an aim of certain embodiments of the present invention to securely hold a wheel member in position relative to a first holder element and a second holder element, even if the wheel member is accidentally knocked or pushed.

According to a first aspect of the present invention there is provided apparatus for holding a wheel member at a desired location, comprising:
a first holder element to engage a first part of a wheel member, a second holder element to engage a second part of the wheel member, the first holder element being disposed in a spaced apart relationship from the second holder element to receive at least a portion of the wheel member therebetween, and
a substantially elongate element for extension across a rim of the wheel member to secure the wheel member relative to the first holder element and the second holder element;
a first end of the elongate element being attached to the first holder element and a second end of the elongate element being releasably coupleable to the second holder element.

By extending the elongate element across the rim of the wheel member, the wheel member is secured relative to the first holder element and the second holder element, even if a tyre pressure of the wheel member reduces or the tyre becomes totally deflated. In this manner the invention ensures that the wheel member is held at the desired location regardless of tyre pressure. By extending the elongate element across the rim of the wheel member, the wheel member is secured relative to the first holder element and the second holder element, even if the wheel member is accidentally knocked or pushed. In this manner the invention ensures that the wheel member is held at the desired location regardless of accidental impacts. The releasable coupling of the second end of the elongate element to the second holder element enables a fast and simple attachment and release of the wheel member from the apparatus when desired so by a user.

According to the invention further comprising a first coupling member attached to the second end of the elongate element; and a second coupling member attached to the second holder element. The first coupling member is releasably coupleable to the second coupling member by magnetic attraction. The magnetic attraction enables a fast and simple coupling and release of the first coupling member relative to the second coupling member when desired so by a user.

Aptly further comprising means to tension the elongate element to draw the elongate element into engagement with a rim of a wheel member. By tensioning the elongate element, this ensures that the wheel member is tightly secured relative to the first holder element and the second holder element, even if the tyre pressure of the wheel member reduces or the tyre becomes totally deflated, and/or even if the wheel member is accidentally knocked or pushed. By tensioning the elongate element, this also ensures that the invention may be employed with a variety of different wheel members of different sizes or different rim dimensions. Aptly the first coupling member is rotatable relative to the second coupling member to tension the elongate element. Aptly further comprising means to facilitate rotation of the first coupling member relative to the second coupling member in a first direction and to prevent rotation of the first coupling member relative to the second coupling member in a second direction.

Aptly further comprising a base part releasably attached to a gripper part, the gripper part comprising the first holder element and the second holder element, the first end of the elongate element being attached to the base part, and the second coupling member being attached to the base part. In this manner the base part and the gripper part may be manufactured separately for ease of manufacturing, and then subsequently assembled together. Aptly the second coupling member is releasably attached to the base part by rotation of the second coupling member relative to the base part. In this manner the second coupling member and the base part may be manufactured separately for ease of manufacturing, and then subsequently assembled together. Aptly the base part comprises a male protrusion and the second coupling member comprises a corresponding female opening to receive the male protrusion.

Aptly further comprising means to fix the base part to a wall surface. In this manner the invention may be employed to stow the wheel member or a bicycle relative to the wall surface. For example by fixing the base part to the wall surface at a suitable height, the bicycle may be stowed in a vertical configuration with the front wheel engaged between the first holder element and the second holder element suspended at a suitable height above the ground, and only the rear wheel resting on the ground.

Aptly the gripper part comprises a support body comprising a first sidewall portion, a further sidewall portion disposed in a spaced apart relationship with the first sidewall portion and a connector portion extending between respective base regions of the first and further sidewall portions, wherein a first gripping region of a first sidewall facing surface at a free end region of the first sidewall portion is convex and a further gripping region of a further sidewall facing surface at a free end region of the further sidewall portion is convex. Aptly further comprising an associated apex region of the first gripping region and an associated apex region of the further gripping region are disposed at a common distance from the connector portion and are disposed in an opposed facing relationship. Aptly the first and further sidewall portions are resilient. Aptly the base part comprises a generally U-shaped outer member and the gripper part comprises a generally U-shaped inner member that nests inside the outer member and is securable thereto. According to the invention the elongate element comprises a flexible tether element secured at a fixed end to the outer member. Aptly the tensioning means comprises a tightening element supported on the outer member for receiving a free end region of the tether element and selectively shortening a length of the tether element between the fixed end and the tightening element thereby tightening the tether element to a desired tension. Aptly further comprising the tightening element comprises a rotatable dial element that is disposed to rotate with respect to the outer member when the free end region of the tether element is received by the tightening element wherein rotation of the dial element tightens the tether element. Aptly the fixed end of the tether element is secured to a first sidewall portion of the outer member and the tightening element is supported on a further sidewall portion of the outer member.

Aptly the first holder element is configured to engage a first part of a tyre of a bicycle wheel and the second holder element is configured to engage a second part of the tyre.

According to a second aspect of the present invention there is provided a method of holding a wheel member at a desired location, the method comprising the steps of:
locating at least a portion of the wheel member between a first holder element and a second holder element to engage the first holder element with a first part of the wheel member and to engage the second holder element with a second part of the wheel member;
extending a substantially elongate element across a rim of the wheel member, a first end of the elongate element being attached to the first holder element; and
coupling a second end of the elongate element to the second holder element to secure the wheel member relative to the first holder element and the second holder element.

By extending the elongate element across the rim of the wheel member, the wheel member is secured relative to the first holder element and the second holder element, even if a tyre pressure of the wheel member reduces or the tyre becomes totally deflated. In this manner the invention ensures that the wheel member is held at the desired location regardless of tyre pressure. By extending the elongate element across the rim of the wheel member, the wheel member is secured relative to the first holder element and the second holder element, even if the wheel member is accidentally knocked or pushed. In this manner the invention ensures that the wheel member is held at the desired location regardless of accidental impacts. The releasable coupling of the second end of the elongate element to the second holder element enables a fast and simple attachment and release of the wheel member from the apparatus when desired so by a user.

Aptly further comprising tensioning the elongate element to draw the elongate element into engagement with the rim of the wheel member. By tensioning the elongate element, this ensures that the wheel member is tightly secured relative to the first holder element and the second holder element, even if the tyre pressure of the wheel member reduces or the tyre becomes totally deflated, and/or even if the wheel member is accidentally knocked or pushed. By tensioning the elongate element, this also ensures that the invention may be employed with a variety of different wheel members of different sizes or different rim dimensions. Aptly further comprising rotating a first coupling member relative to a second coupling member to tension the elongate element.

Aptly further comprising fixing the first holder element and the second holder element to a wall surface. In this manner the invention may be employed to stow the wheel member or a bicycle relative to the wall surface. For example by fixing the first holder element and the second holder element to the wall surface at a suitable height, the bicycle may be stowed in a vertical configuration with the front wheel engaged between the first holder element and the second holder element suspended at a suitable height above the ground, and only the rear wheel resting on the ground.

Embodiments of the present invention will now be described hereinafter, by way of example only, with reference to the accompanying drawings in which:
Figure 1 is an exploded perspective view of an apparatus according to the invention for holding a wheel member at a desired location;
Figure 2(a) is an enlarged perspective view of detail A of part of the apparatus of Figure 1;
Figure 2(b) is an enlarged perspective view of detail B of part of the apparatus of Figure 1;
Figure 3 is an exploded perspective view of parts of the apparatus of Figure 1;
Figure 4 is an assembled perspective view of the apparatus of Figure 1 in a decoupled configuration;
Figure 5 is a plan view of the apparatus of Figure 4 in the decoupled configuration;
Figure 6 is a front view of the apparatus of Figure 4 in the decoupled configuration;
Figure 7 is an end view of the apparatus of Figure 4 in the decoupled configuration;
Figure 8 is an assembled perspective view of the apparatus of Figure 1 in a coupled configuration;

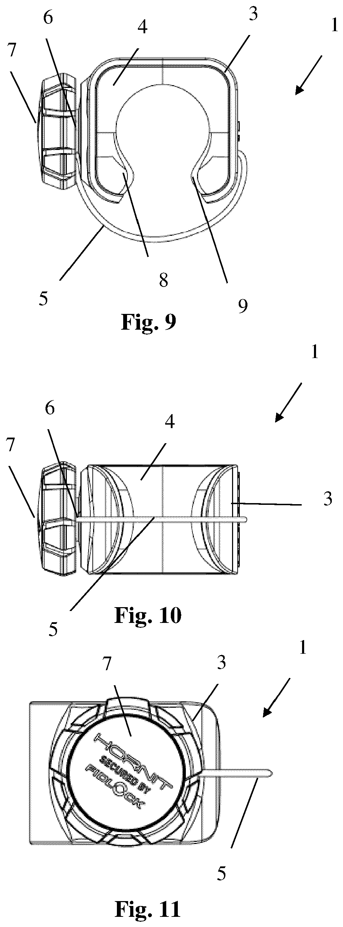

Figure 9 is a plan view of the apparatus of Figure 8 in the coupled configuration;
Figure 10 is a front view of the apparatus of Figure 8 in the coupled configuration;
Figure 11 is an end view of the apparatus of Figure 8 in the coupled configuration; and
Figures 12 to 20 are perspective views of the apparatus of Figure 1 in use.

In the drawings like reference numerals refer to like parts.

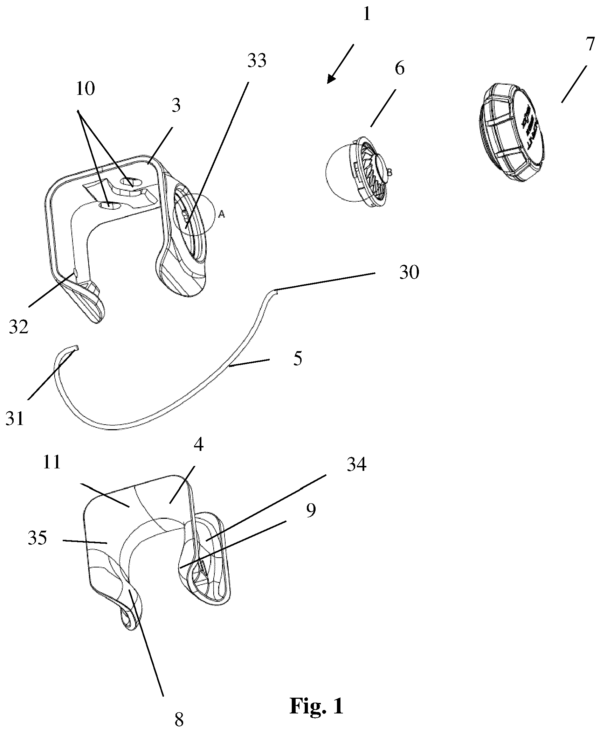

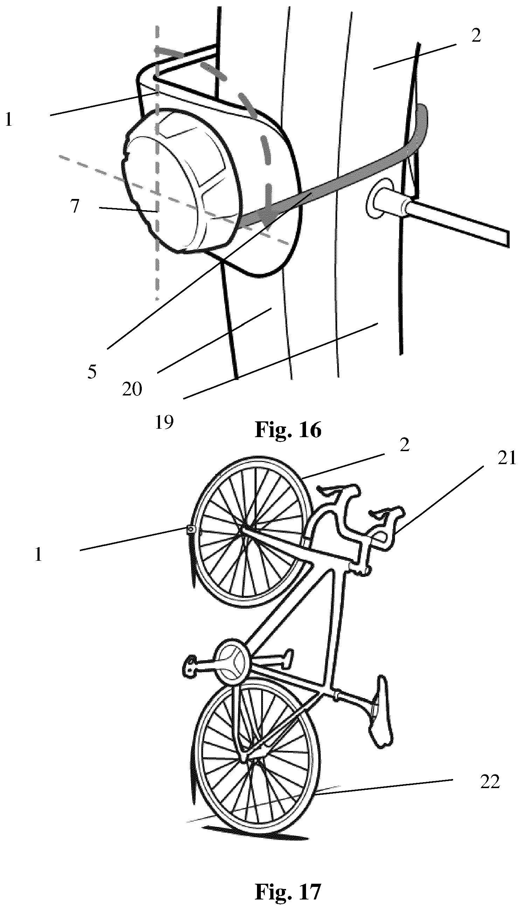

Referring to the drawings, and initially to Fig. 1 thereof, there is illustrated an apparatus 1 according to the invention for holding a wheel at a desired location. In this case the apparatus 1 may be employed to hold a front wheel 2 of a bicycle 21 (Fig. 17).

The apparatus 1 comprises a base part 3, a gripper part 4, an elongate flexible tether cord 5, a first coupling disc 7, and a second coupling disc 6 (Fig. 1).

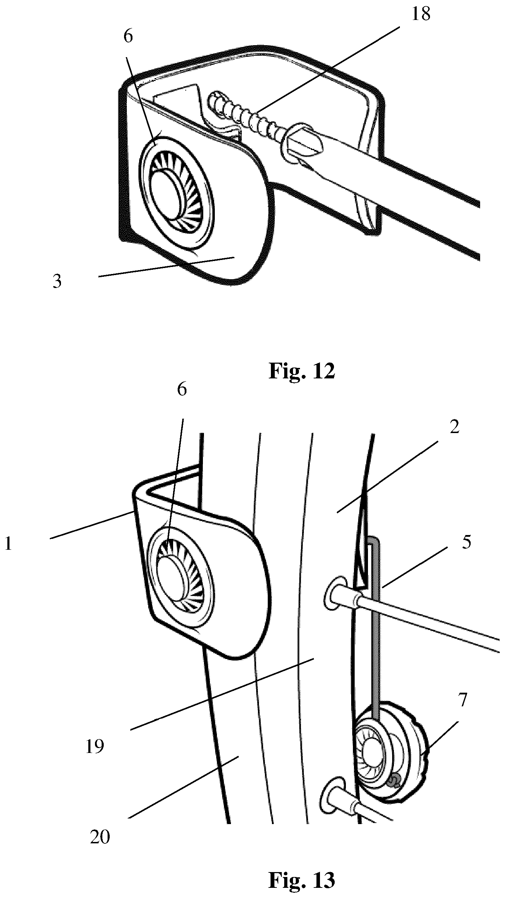

The base part 3 includes a plurality of fixing openings 10 (Fig. 1) to receive a plurality of corresponding fixers 18 to fix the base part 3 to a wall (Fig. 12). In this case the base part 3 is fixed to the wall at a suitable height to stow the bicycle 21 in a vertical configuration with the front wheel 2 held by the apparatus 1 suspended at a suitable height above the ground, and only the rear wheel 22 resting on the ground (Fig. 17).

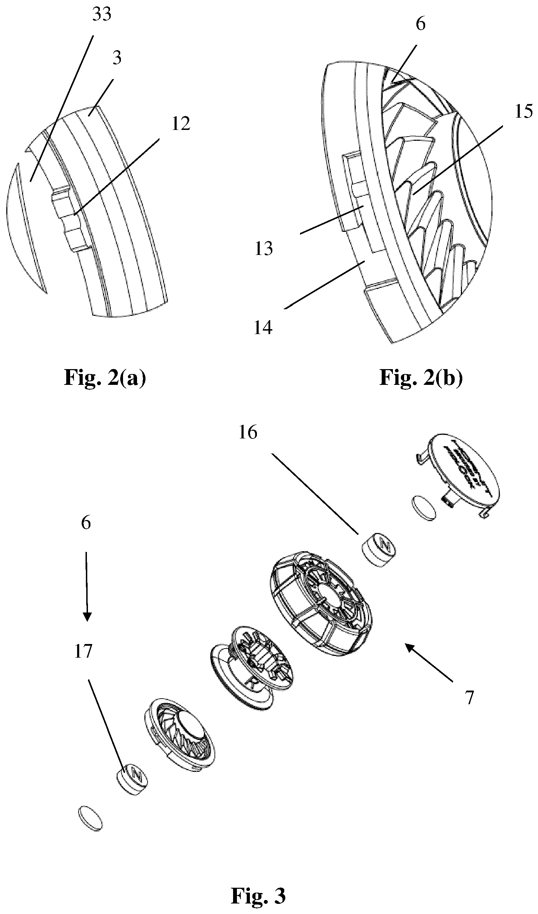

The base part 3 includes a side opening 33 (Fig. 1). The base part 3 also includes a protruding upstanding tooth 12 along an edge of the side opening 33 (Fig. 2(a)). The second coupling disc 6 includes an insertion opening 14 and a bayonet opening 13 along an outer edge of the second coupling disc 6 (Fig. 2(b)). The insertion opening 14 and the bayonet opening 13 correspond to the protruding upstanding tooth 12, and the insertion opening 14 and the bayonet opening 13 may receive the protruding upstanding tooth 12. The second coupling disc 6 may be releasably attached to a sidewall portion of the base part 3 by locating the second coupling disc 6 in the side opening 33 with the protruding upstanding tooth 12 aligned with the insertion opening 14, and then rotating the second coupling disc 6 relative to the base part 3 to move the protruding upstanding tooth 12 into the bayonet opening 13.

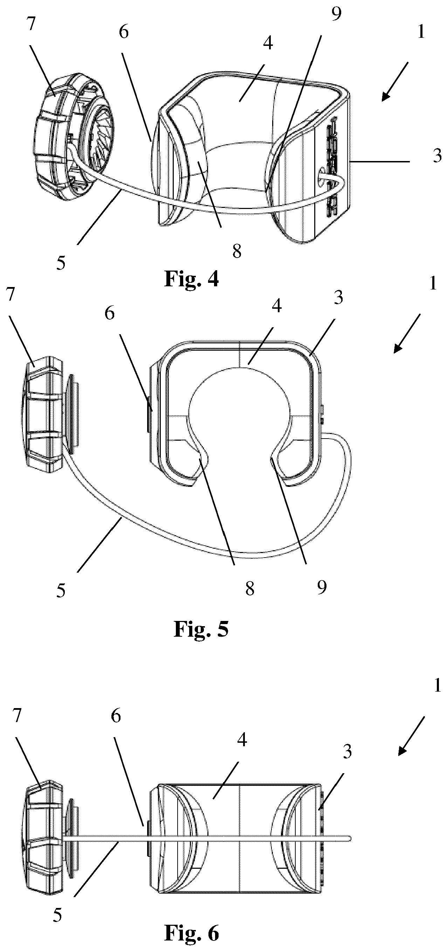

The gripper part 4 may be releasably attached to the base part 3 by pushing the gripper part 4 into the base part 3 in a snap fit arrangement (Figs. 1, 4). The base part 3 is provided in the form of a generally U-shaped outer member. The gripper part 4 is provided in the form of a generally U-shaped inner member that nests inside the outer member and is securable thereto.

The gripper part 4 includes a first holder element 8 to engage a first side of a tyre 20 of the front wheel 2 and a second holder element 9 to engage a second side of the tyre 20 opposite to the first side. The first holder element 8 is disposed in a spaced apart relationship from the second holder element 9 (Fig. 5) to allow a portion of the tyre 20 to be passed therebetween (Fig. 13). In further detail the gripper part 4 comprises a support body comprising a first sidewall portion 35, a further sidewall portion 34 disposed in a spaced apart relationship with the first sidewall portion 35 and a connector portion 11 extending between respective base regions of the first sidewall portion 35 and the further sidewall portion 34 (Fig. 1). The first holder element 8 is provided in the form of a first gripping region of a first sidewall facing surface at a free end region of the first sidewall portion 35. The first gripping region 8 is convex in shape (Fig. 5). The second holder element 9 is provided in the form of a second gripping region of a further sidewall facing surface at a free end region of the further sidewall portion 34. The second gripping region 9 is convex in shape (Fig. 5). The first sidewall portion 35 and the further sidewall portion 34 are of a resilient material. An apex region of the first gripping region 8 and an apex region of the second gripping region 9 are disposed at a common distance from the connector portion 11 and are disposed in an opposed facing relationship (Figs. 1, 5).

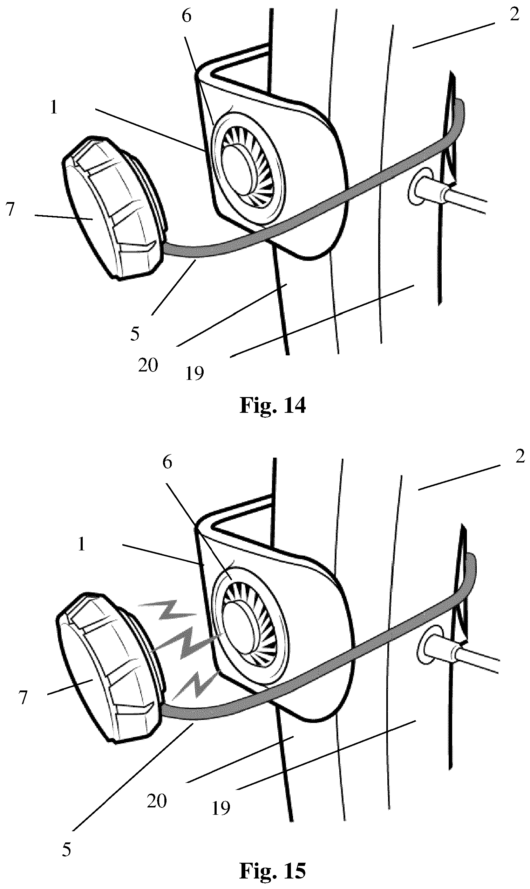

A first fixed end 31 of the tether cord 5 is securely attached to a first sidewall portion of the base part 3. In this case the first fixed end 31 of the tether cord 5 is attached to the base part 3 by inserting the first end 31 through an opening 32 in the base part 3 (Fig. 1), and then knotting the tether cord 5. The base part 3 is attached to the gripper part 4 having the first holder element 8 in the snap fit arrangement. A second free end 30 of the tether cord 5 is attached to the first coupling disc 7 (Fig. 4). The tether cord 5 is extendable across a rim 19 of the front wheel 2 to secure the front wheel 2 relative to the gripper part 4 with the first holder element 8 and the second holder element 9 (Figs. 14, 16).

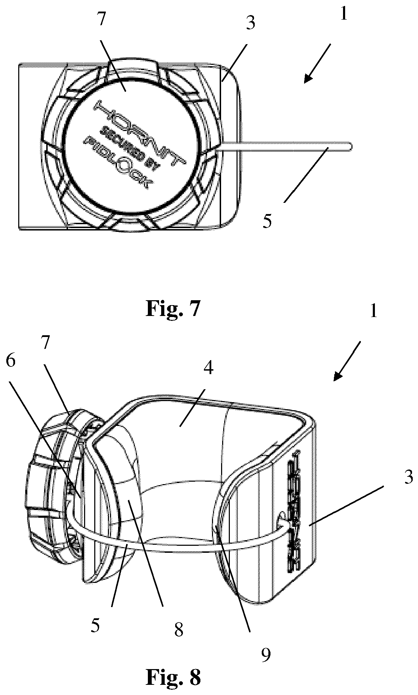

The first coupling disc 7 includes a first magnetic part 16, and the second coupling disc 6 includes a second magnetic part 17 (Fig. 3) to releasably couple the first coupling disc 7 to the second coupling disc 6 by magnetic attraction (Figs. 4, 8). The second coupling disc 6 is attached to the base part 3 by insertion and rotation. The base part 3 is attached to the gripper part 4 having the second holder element 9 in the snap fit arrangement.

The first coupling disc 7 is rotatable relative to the second coupling disc 6 to loop part of the tether cord 5 around the second coupling disc 6 to tension the tether cord 5 and to draw the tether cord 5 into engagement with the rim 19 of the front wheel 2 (Figs. 15, 16). In this manner the first coupling disc 7 acts as a winch to draw the tether cord 5 into place. The first coupling disc 7 acts as a tightening element for receiving the second free end 30 of the tether cord 5 and selectively shortening the length of the tether cord 5 between the first fixed end 31 and the first coupling disc 7 thereby tightening the tether cord 5 to a desired tension. The first coupling disc 7 acts as a rotatable dial that is disposed to rotate with respect to the base part 3 when the second free end 30 of the tether cord 5 is received by the first coupling disc 7. Rotation of the first coupling disc 7 then tightens the tether cord 5. The first coupling disc 7 includes a plurality of ratchet teeth, and the second coupling disc 6 includes a plurality of corresponding ratchet teeth 15 (Fig. 2(b)). The ratchet teeth interengage to facilitate rotation of the first coupling disc 7 relative to the second coupling disc 6 in a first direction (Fig .16), and to prevent rotation of the first coupling disc 7 relative to the second coupling disc 6 in an opposite second direction.

To assemble the apparatus 1, the second coupling disc 6 is located in the side opening 33 of the base part 3 with the protruding upstanding tooth 12 aligned with the insertion opening 14. The second coupling disc 6 is then rotated relative to the base part 3 to move the protruding upstanding tooth 12 into the bayonet opening 13. The first end 31 of the tether cord 5 is inserted through the opening 32 in the base part 3, and the tether cord 5 is knotted. The gripper part 4 is attached to the base part 3 by pushing the gripper part 4 into the base part 3 in the snap fit arrangement. The second end 30 of the tether cord 5 is attached to the first coupling disc 7.

In use, the base part 3 is fixed to the wall by extending the fixers 18 though the fixing openings 10 (Fig. 12). A portion of the tyre 20 is inserted into the gripper part 4 between the first holder element 8 and the second holder element 9 (Fig. 13). The first holder element 8 engages the first side of the tyre 20 of the front wheel 2 and the second holder element 9 engages the second side of the tyre 20. The tether cord 5 is extended across the rim 19 of the front wheel 2 (Fig. 14). The first coupling disc 7 is coupled to the second coupling disc 6 by magnetic attraction between the magnetic parts 16, 17 (Fig. 15). The first coupling disc 7 is rotated relative to the second coupling disc 6 to loop the excess part of the tether cord 5 around the second coupling disc 6 to tension the tether cord 5 and to draw the tether cord 5 into engagement with the rim 19 of the front wheel 2 (Fig. 16). The tightened tether cord 5 secures the front wheel 2 relative to the gripper part 4. The ratchet teeth facilitate rotation of the first coupling disc 7 relative to the second coupling disc 6 in the first direction, and prevent rotation of the first coupling disc 7 relative to the second coupling disc 6 in the opposite second direction.

The apparatus 1 thus holds the front wheel 2 at the desired location to stow the bicycle 21 in the vertical configuration with the front wheel 2 held by the apparatus 1 suspended at the suitable height above the ground, and the rear wheel 22 resting on the ground (Fig. 17).

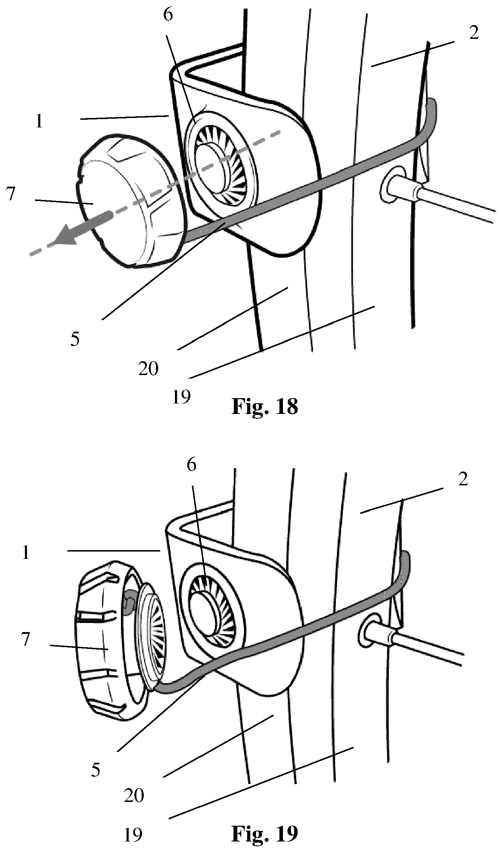

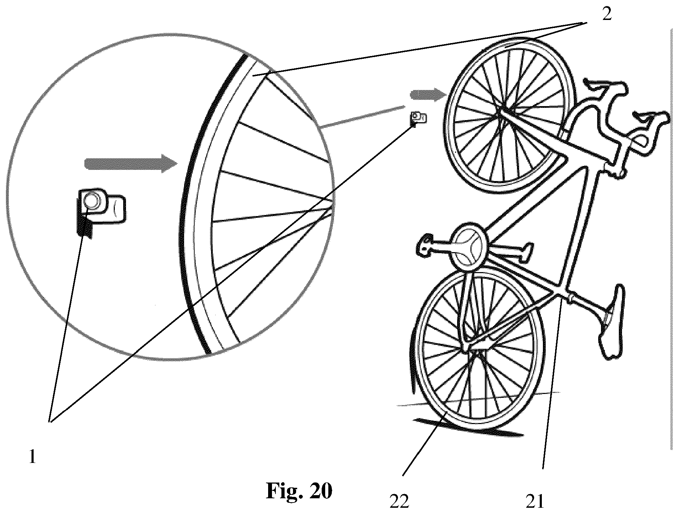

To remove the front wheel 2 from the apparatus 1, the first coupling disc 7 is decoupled from the second coupling disc 6 by pulling the first coupling disc 7 away from the second coupling disc 6 (Fig. 18). The excess part of the tether cord 5 falls loose again (Fig. 19). The tether cord 5 is extracted from the rim 19 of the front wheel 2. The tyre 20 is pulled out of the gripper part 4 (Fig. 20).

It will be appreciated that the gripper part may be provided in a variety of different sizes and shapes to suit a variety of different types of wheels, for example a smaller or narrower gripper part may suit a narrower road bicycle tyre, or a wider or larger gripper part may suit a mountain bicycle tyre.

It will be appreciated that the apparatus of the invention is also suitable for holding other types of wheels, and is not limited to holding bicycle wheels.

It will be appreciated that the apparatus of the invention may also be employed to stow a bicycle in a horizontal configuration with the front wheel and the rear wheel resting on the ground.

It will be appreciated that the apparatus of the invention may employ any suitable means to secure the wheel relative to the first holder element and the second holder element. The invention is not limited to using a specific tether cord.

It will be appreciated that the fixed end 31 of the tether cord 5 may be securely attached to the first sidewall portion 35 of the gripper part 4, rather than to the first sidewall portion of the base part 3.

It will be appreciated that the component parts of the apparatus of the invention may be provided in any suitable shape, and the invention is not limited to the specific shapes hereinbefore described. For example the invention is not limited to a U-shaped base part, the invention is not limited to a U-shaped gripper part, the invention is not limited to a disc-shaped first coupling member, and the invention is not limited to a disc-shaped second coupling member.

The invention is not limited to the embodiment hereinbefore described, with reference to the accompanying drawings, which may be varied in construction and detail.

Throughout the description and claims of this specification, the words "comprise" and "contain" and variations of them mean "including but not limited to" and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

The scope of the invention is defined by the appended claims.

## Claims

1. Apparatus (1) for holding a wheel member (2) at a desired location, the apparatus (1) comprising:
a first holder element (8) to engage a first part of a wheel member (2), a second holder element (9) to engage a second part of the wheel member (2), the first holder element (8) being disposed in a spaced apart relationship from the second holder element (9) to receive at least a portion of the wheel member (2) therebetween,
a substantially elongate element (5) for extension across a rim (19) of the wheel member (2) to secure the wheel member (2) relative to the first holder element (8) and the second holder element (9);
a first end (31) of the elongate element (5) being attached to the first holder element (8) and a second end (30) of the elongate element (5) being releasably coupleable to the second holder element (9);
a first coupling member (7) attached to the second end (30) of the elongate element (5); and
a second coupling member (6) attached to the second holder element (9);
wherein the first coupling member (7) is releasably coupleable to the second coupling member (6) by magnetic attraction, and **characterized in that**
the elongate element (5) comprises a flexible tether.

2. The apparatus as claimed in claim 1 further comprising:
means to tension the elongate element (5) to draw the elongate element (5) into engagement with a rim (19) of a wheel member (2).

3. The apparatus as claimed in claim 2 wherein the first coupling member (7) is rotatable relative to the second coupling member (6) to tension the elongate element (5).

4. The apparatus as claimed in claim 3 further comprising:
means to facilitate rotation of the first coupling member (7) relative to the second coupling member (6) in a first direction and to prevent rotation of the first coupling member (7) relative to the second coupling member (6) in a second direction.

5. The apparatus as claimed in any of claims 1 to 4 further comprising:
a base part (3) releasably attached to a gripper part (4), the gripper part (4) comprising the first holder element (8) and the second holder element (9), the first end (31) of the elongate element (5) being attached to the base part (3), and the second coupling member (6) being attached to the base part (3).

6. The apparatus as claimed in claim 5 wherein the second coupling member (6) is releasably attached to the base part (3) by rotation of the second coupling member (6) relative to the base part (3).

7. The apparatus as claimed in claim 5 or 6 wherein the gripper part (4) comprises a support body comprising a first sidewall portion (35), a further sidewall portion (34) disposed in a spaced apart relationship with the first sidewall portion (35) and a connector portion (11) extending between respective base regions of the first and further sidewall portions (35, 34), wherein a first gripping region of a first sidewall facing surface at a free end region of the first sidewall portion (35) is convex and a further gripping region of a further sidewall facing surface at a free end region of the further sidewall portion (34) is convex.

8. The apparatus as claimed in claim 7 wherein the first and further sidewall portions (35, 34) are resilient.

9. The apparatus as claimed in any of claims 1 to 8 wherein the first holder element (8) is configured to engage a first part of a tyre (20) of a bicycle wheel (2) and the second holder element (9) is configured to engage a second part of the tyre (20).

10. A method of holding a wheel member (2) at a desired location, the method comprising the steps of:
locating at least a portion of the wheel member (2) between a first holder element (8) and a second holder element (9) to engage the first holder element (8) with a first part of the wheel member (2) and to engage the second holder element (9) with a second part of the wheel member (2);
extending a substantially elongate element (5) across a rim (19) of the wheel member (2), wherein the elongate element (5) comprises a flexible tether;
a first end (31) of the elongate element (5) being attached to the first holder element (8); and
coupling a second end (30) of the elongate element (5) to the second holder element (9) by magnetic attraction to secure the wheel member (2) relative to the first holder element (8) and the second holder element (9);
wherein a first coupling member (7) is attached to the second end (30) of the elongate element (5), a second coupling member (6) is attached to the second holder element (9), and the first coupling member (7) is coupled to the second coupling member (6) by magnetic attraction.

11. The method as claimed in claim 10 further comprising:
tensioning the elongate element (5) to draw the elongate element (5) into engagement with the rim (19) of the wheel member (2).

12. The method as claimed in claim 11 further comprising:
rotating the first coupling member (7) relative to the second coupling member (6) to tension the elongate element (5).

13. The method as claimed in any of claims 10 to 12 further comprising:
fixing the first holder element (8) and the second holder element (9) to a wall surface.

## Patentansprüche

1. Vorrichtung (1) zum Halten eines Radelements (2) an einer gewünschten Stelle, wobei die Vorrichtung (1) Folgendes umfasst:
ein erstes Halterungsbauteil (8), um einen ersten Teil eines Radelements (2) in Eingriff zu nehmen, ein zweites Halterungsbauteil (9), um einen zweiten Teil des Radelements (2) in Eingriff zu nehmen, wobei das erste Halterungsbauteil (8) in einer beabstandeten Beziehung zu dem zweiten Halterungsbauteil (9) angeordnet ist, um mindestens einen Abschnitt des Radelements (2) dazwischen aufzunehmen,
ein im Wesentlichen längliches Bauteil (5) zur Erstreckung über eine Felge (19) des Radelements (2), um das Radelement (2) relativ zu dem ersten Halterungsbauteil (8) und dem zweiten Halterungsbauteil (9) zu fixieren;
wobei ein erstes Ende (31) des länglichen Bauteils (5) an dem ersten Halterungsbauteil (8) befestigt ist und ein zweites Ende (30) des länglichen Bauteils (5) lösbar an das zweite Halterungsbauteil (9) koppelbar ist;
ein erstes Kopplungselement (7), das an dem zweiten Ende (30) des länglichen Bauteils (5) befestigt ist; und
ein zweites Kopplungselement (6), das an dem zweiten Halterungsbauteil (9) befestigt ist;
wobei das erste Kopplungselement (7) durch magnetische Anziehung lösbar an das zweite Kopplungselement (6) koppelbar ist, und **dadurch gekennzeichnet, dass**
das längliche Bauteil (5) ein flexibles Halteseil umfasst.

2. Vorrichtung nach Anspruch 1 ferner umfassend:
Mittel zum Spannen des länglichen Bauteils (5), um das längliche Bauteil (5) in Eingriff mit einer Felge (19) eines Radelements (2) zu ziehen.

3. Vorrichtung nach Anspruch 2 wobei das erste Kopplungselement (7) relativ zu dem zweiten Kopplungselement (6) drehbar ist, um das längliche Bauteil (5) zu spannen.

4. Vorrichtung nach Anspruch 3 ferner umfassend:
Mittel, um die Drehung des ersten Kopplungselements (7) relativ zu dem zweiten Kopplungselement (6) in einer ersten Richtung zu erleichtern und eine Drehung des ersten Kopplungselements (7) relativ zu dem zweiten Kopplungselement (6) in einer zweiten Richtung zu verhindern.

5. Vorrichtung nach einem der Ansprüche 1 bis 4 ferner umfassend:
ein Basisteil (3), das lösbar an einem Greiferteil (4) befestigt ist, wobei das Greiferteil (4) das erste Halterungsbauteil (8) und das zweite Halterungsbauteil (9) umfasst, wobei das erste Ende (31) des länglichen Bauteils (5) an dem Basisteil (3) befestigt ist und das zweite Kopplungselement (6) an dem Basisteil (3) befestigt ist.

6. Vorrichtung nach Anspruch 5 wobei das zweite Kopplungselement (6) durch Drehung des zweiten Kopplungselements (6) relativ zu dem Basisteil (3) lösbar an dem Basisteil (3) befestigt wird.

7. Vorrichtung nach Anspruch 5 oder 6 wobei das Greiferteil (4) einen Stützkörper umfasst, der einen ersten Seitenwandabschnitt (35), einen weiteren Seitenwandabschnitt (34), der in einer beabstandeten Beziehung zu dem ersten Seitenwandabschnitt (35) angeordnet ist, und einen Verbindungsabschnitt (11) umfasst, der sich zwischen jeweiligen Basisbereichen des ersten und des weiteren Seitenwandabschnitts (35, 34) erstreckt, wobei ein erster Greifbereich einer der ersten Seitenwand zugewandten Oberfläche an einem freien Endbereich des ersten Seitenwandabschnitts (35) konvex ist und ein weiterer Greifbereich einer der weiteren Seitenwand zugewandten Oberfläche an einem freien Endbereich des weiteren Seitenwandabschnitts (34) konvex ist.

8. Vorrichtung nach Anspruch 7 wobei der erste und der weitere Seitenwandabschnitt (35, 34) elastisch sind.

9. Vorrichtung nach einem der Ansprüche 1 bis 8 wobei das erste Halterungsbauteil (8) dazu konfiguriert ist, einen ersten Teil eines Reifens (20) eines Fahrradrades (2) in Eingriff zu nehmen, und das zweite Halterungsbauteil (9) dazu konfiguriert ist, einen zweiten Teil des Reifens (20) in Eingriff zu nehmen.

10. Verfahren zum Halten eines Radelements (2) an einer gewünschten Stelle, wobei das Verfahren die folgenden Schritte umfasst:
Positionieren mindestens eines Abschnitts des Radelements (2) zwischen einem ersten Halterungsbauteil (8) und einem zweiten Halterungsbauteil (9), um das erste Halterungsbauteil (8) mit einem ersten Teil des Radelements (2) in Eingriff zu bringen und das zweite Halterungsbauteil (9) mit einem zweiten Teil des Radelements (2) in Eingriff zu bringen;
Erstrecken eines im Wesentlichen länglichen Bauteils (5) über eine Felge (19) des Radelements (2), wobei das längliche Bauteil (5) ein flexibles Halteseil umfasst;
wobei ein erstes Ende (31) des länglichen Bauteils (5) an dem ersten Halterungsbauteil (8) befestigt ist; und
Koppeln eines zweiten Endes (30) des länglichen Bauteils (5) an das zweite Halterungsbauteil (9) durch magnetische Anziehung, um das Radelement (2) relativ zu dem ersten Halterungsbauteil (8) und dem zweiten Halterungsbauteil (9) zu fixieren;
wobei ein erstes Kopplungselement (7) an dem zweiten Ende (30) des länglichen Bauteils (5) befestigt ist, ein zweites Kopplungselement (6) an dem zweiten Halterungsbauteil (9) befestigt ist und das erste Kopplungselement (7) durch magnetische Anziehung an das zweite Kopplungselement (6) gekoppelt ist.

11. Verfahren nach Anspruch 10 ferner umfassend:
Spannen des länglichen Bauteils (5), um das längliche Bauteil (5) in Eingriff mit der Felge (19) des Radelements (2) zu ziehen.

12. Verfahren nach Anspruch 11 ferner umfassend:
Drehen des ersten Kopplungselements (7) relativ zu dem zweiten Kopplungselement (6), um das längliche Bauteil (5) zu spannen.

13. Verfahren nach einem der Ansprüche 10 bis 12 ferner umfassend:
Sichern des ersten Halterungsbauteils (8) und des zweiten Halterungsbauteils (9) an einer Wandoberfläche.

## Revendications

1. Appareil (1) permettant le maintien d'un élément de roue (2) à un emplacement souhaité, l'appareil (1) comprenant :
un premier élément de maintien (8) pour venir en prise avec une première partie d'un élément de roue (2), un second élément de maintien (9) pour venir en prise avec une seconde partie de l'élément de roue (2), le premier élément de maintien (8) étant disposé dans une relation espacée du second élément de maintien (9) pour recevoir au moins une partie de l'élément de roue (2) entre ceux-ci,
un élément sensiblement allongé (5) destiné à s'étendre à travers une jante (19) de l'élément de roue (2) pour fixer l'élément de roue (2) par rapport au premier élément de maintien (8) et au second élément de maintien (9) ;
une première extrémité (31) de l'élément allongé (5) étant fixée au premier élément de maintien (8) et une seconde extrémité (30) de l'élément allongé (5) pouvant être couplée de manière amovible au second élément de maintien (9) ;
un premier élément de couplage (7) fixé à la seconde extrémité (30) de l'élément allongé (5) ; et
un second élément de couplage (6) fixé au second élément de maintien (9) ;
dans lequel le premier élément de couplage (7) peut être couplé de manière amovible au second élément de couplage (6) par attraction magnétique, et **caractérisé en ce que**
l'élément allongé (5) comprend une attache flexible.

2. Appareil selon la revendication 1 comprenant en outre :
un moyen pour tendre l'élément allongé (5) pour mettre, par traction, l'élément allongé (5) en prise avec une jante (19) d'un élément de roue (2).

3. Appareil selon la revendication 2 dans lequel le premier élément de couplage (7) peut tourner par rapport au second élément de couplage (6) pour tendre l'élément allongé (5).

4. Appareil selon la revendication 3 comprenant en outre :
un moyen pour faciliter une rotation du premier élément de couplage (7) par rapport au second élément de couplage (6) dans une première direction et pour empêcher une rotation du premier élément de couplage (7) par rapport au second élément de couplage (6) dans une seconde direction.

5. Appareil selon l'une quelconque des revendications 1 à 4 comprenant en outre :
une partie de base (3) fixée de manière amovible à une partie de préhension (4), la partie de préhension (4) comprenant le premier élément de maintien (8) et le second élément de maintien (9), la première extrémité (31) de l'élément allongé (5) étant fixée à la partie de base (3), et le second élément de couplage (6) étant fixé à la partie de base (3).

6. Appareil selon la revendication 5 dans lequel le second élément de couplage (6) est fixé de manière amovible à la partie de base (3) par rotation du second élément de couplage (6) par rapport à la partie de base (3).

7. Appareil selon la revendication 5 ou 6 dans lequel la partie de préhension (4) comprend un corps de support comprenant une première partie de paroi latérale (35), une autre partie de paroi latérale (34) disposée dans une relation espacée avec la première partie de paroi latérale (35) et une partie de raccord (11) s'étendant entre des régions de base respectives de la première et de l'autre parties de paroi latérale (35, 34), dans lequel une première zone de préhension d'une première surface faisant face à une paroi latérale au niveau d'une zone d'extrémité libre de la première partie de paroi latérale (35) est convexe et une autre zone de préhension d'une autre surface faisant face à une paroi latérale au niveau d'une zone d'extrémité libre de l'autre partie de paroi latérale (34) est convexe.

8. Appareil selon la revendication 7 dans lequel la première et l'autre parties de paroi latérale (35, 34) sont élastiques.

9. Appareil selon l'une quelconque des revendications 1 à 8 dans lequel le premier élément de maintien (8) est conçu pour venir en prise avec une première partie d'un pneu (20) d'une roue de bicyclette (2) et le second élément de maintien (9) est conçu pour venir en prise avec une seconde partie du pneu (20).

10. Procédé de maintien d'un élément de roue (2) à un emplacement souhaité, le procédé comprenant les étapes suivantes :
le placement d'au moins une partie de l'élément de roue (2) entre un premier élément de maintien (8) et un second élément de maintien (9) pour venir en prise avec le premier élément de maintien (8) avec une première partie de l'élément de roue (2) et pour venir en prise avec le second élément de maintien (9) avec une seconde partie de l'élément de roue (2) ;
l'extension d'un élément sensiblement allongé (5) à travers une jante (19) de l'élément de roue (2), dans lequel l'élément allongé (5) comprend une attache flexible ;
une première extrémité (31) de l'élément allongé (5) étant fixée au premier élément de maintien (8) ; et
le couplage d'une seconde extrémité (30) de l'élément allongé (5) au second élément de maintien (9) par attraction magnétique pour fixer l'élément de roue (2) par rapport au premier élément de maintien (8) et au second élément de maintien (9) ;
dans lequel un premier élément de couplage (7) est fixé à la seconde extrémité (30) de l'élément allongé (5), un second élément de couplage (6) est fixé au second élément de maintien (9), et le premier élément de couplage (7) est couplé au second élément de couplage (6) par attraction magnétique.

11. Procédé selon la revendication 10 comprenant en outre :
la tension de l'élément allongé (5) pour mettre, par traction, l'élément allongé (5) en prise avec la jante (19) de l'élément de roue (2).

12. Procédé selon la revendication 11 comprenant en outre :
la rotation du premier élément de couplage (7) par rapport au second élément de couplage (6) pour tendre l'élément allongé (5).

13. Procédé selon l'une quelconque des revendications 10 à 12 comprenant en outre :
la fixation du premier élément de maintien (8) et du second élément de maintien (9) à une surface de paroi.
